# EUROPÄISCHE PATENTSCHRIFT

(11) **EP 0 691 488 B1**
(45) Veröffentlichungstag und Bekanntmachung des Hinweises auf die Patenterteilung: **17.11.1999**
(21) Anmeldenummer: 95108571.1
(22) Anmeldetag: 03.06.1995
(51) Int. Cl.: F16J 15/06

(54) **Flachdichtung**
Flat gasket
Joint plat

(30) Priorität: 07.07.1994 DE 4423893
(43) Veröffentlichungstag der Anmeldung: 10.01.1996
(73) Patentinhaber: Firma Carl Freudenberg, 69469 Weinheim (DE)
(72) Erfinder: Spiess, Karl-Heinz, Dr., D-69488 Birkenau (DE); Kober, Horst, D-69469 Weinheim (DE); Kosack, Steffen, Dr., D-67454 Hassloch (DE)

(56) Entgegenhaltungen:
- EP-A- 0 520 380
- DE-A- 3 006 656
- DE-A- 4 101 871
- DE-A- 4 226 012

## Beschreibung

Die Erfindung betrifft eine Flachdichtung mit Dichtflächen aus polymerem Werkstoff.

Eine solche Flachdichtung ist aus der DE 41 01 871 A1 bekannt und mit einem stationären Druckverteilungs- und Druckverlaufssensor versehen. Die Flachdichtung besteht aus zwei Dichtungshälften, in die zwischen zwei elektrisch isolierenden Schutzfolien eine Sensorfolie angeordnet ist, die aus einer flexiblen piezoelektrischen Polymerschicht besteht. Die Größe und die Anzahl der aktiven Sensorfelder auf der Sensorfolie werden durch beidseitig aufgedampfte Leiterflächen mit abgehenden Leiterbahnen definiert. Auf die Enden dieser aufgedampften Leiterbahnen werden kupferbeschichtete Polyesterfolienstreifen gelegt, die den Kontakt durch Berührung herstellen und außerhalb der Dichtung in einen Miniatur-Coaxialstecker münden. Dabei ist allerdings zu beachten, daß die Herstellung einer solchen Dichtung aufwendig und schwierig ist, da die verschiedenen Schichten und Leiterstreifen mit einem elastischen Kontaktkleber paßgenau versiegelt und verpreßt werden müssen.

Der Erfindung liegt die Aufgabe zugrunde, eine Flachdichtung der eingangs genannten Art derart weiterzuentwickeln, daß diese einfacher herstellbar ist.

Diese Aufgabe wird erfindungsgemäß durch die kennzeichnenden Merkmale von Anspruch 1 gelöst. Auf vorteilhafte Ausgestaltungen nehmen die Unteransprüche Bezug.

Im Rahmen der vorliegenden Erfindung ist es vorgesehen, daß die beiden Dichtflächen durch zwei vliesstoffverstärkte Deckschichten gebildet sind, die gleichzeitig zusammen eine flexible elektrische Leiterplatte bilden. Deren Material, nämlich imprägnierter Vliesstoff, umschließt in den Dichtbereichen vollständig elektrische Leiterbahnen. Diese sind mit Anschlußleitern versehen, die mit Anschlußflächen aus der Leiterplatte herausgeführt sind. Durch diese Ausgestaltung können ohne zusätzlichen Aufwand Flachdichtungen mit integrierten Anschlüssen geschaffen werden, wobei die Anschlußleiter die gegeneinander abzudichtenden Räume signalleitend verbinden. Außerdem besteht die Möglichkeit, im Dichtbereich der Flachdichtung integrierte Sensoren mit den Anschlußflächen zu verbinden.

Die Flachdichtung ist aus mehreren Lagen Vliesstoff-Prepreg aufgebaut. Unter einem Prepreg ist hier ein mit einem Bindemittel verfestigtes Faservlies, also ein Vliesstoff, zu verstehen, der mit einer polymeren Mischung imprägniert ist. Dieses Prepreg ist nach dem Trocknungsprozeß handtrocken, noch nicht voll auspolymerisiert und daher klebe- oder siegelfähig. Es ermöglicht eine einfache Herstellung der Deckschichten und der gesamten Flachdichtung und bewirkt eine große mechanische Festigkeit des Dichtungswerkstoffs.

Die Herstellung der Flachdichtung wird derart vorgenommen, daß zunächst die Vliesstoffbahnen mit einer gefüllten oder ungefüllten Polymerdispersion getränkt und so getrocknet werden, daß die Polymerschicht noch klebe- und siegelfähig bleibt. Auf eine Prepregbahn wird eine Metallfolie, in der Regel aus Kupfer, kaschiert, vorzugsweise in einem kontinuierlichen Laminierverfahren. Auf diesem metallkaschierten Laminat werden anschließend Anschlußleiterbilder nach bekannten Verfahren der Leiterplattenherstellung derart gestaltet, daß die Deckschicht, die gleichzeitig Dielektrikum der Leiterplatte ist, mit einer nahezu geschlossenen Leiterfläche belegt ist. Durch diese Gestaltung erhält man einen sehr planparallelen Verbund, denn beim Laminiervorgang einer weiteren Prepregbahn auf das Leiterbild fließt das Polymer des Prepregs in die Vertiefungen zwischen den Leiterbahnen und verklebt die beiden Teile miteinander.

Dadurch sind die Leiterbahnen mit den Deckschichten kraft- und/oder formschlüssig verbunden und die einzelnen Leiterbahnen gegeneinander elektrisch isoliert. Das Ergebnis ist eine Flachdichtung mit integrierten Anschlußleitern.

Für die einwandfreie elektrische Funktion ist es notwendig, daß der Werkstoff der vliesstoffverstärkten Deckschichten einen elektrischen Widerstand von zumindest 10⁸ Ohm aufweist und als Isolierung für die Leiterbahnen ausgebildet ist. Der Vliesstoff, die Füllstoffe und die Polymere sind derart aufeinander abgestimmt, daß die Flachdichtung einerseits die gegeneinander abzudichtenden Räume sicher abdichtet und andererseits die Leiterlage gegen metallische Flansche mit einem möglichst großen Isolationswiderstand über 10⁸ Ohm isoliert ist.

Um mehrere elektrische Funktionen in die Flachdichtung integrieren zu können, kann es vorgesehen sein, daß zumindest zwei Leiterplatten zur Anwendung gelangen, deren jeweilige Leiterbahnen mit Anschlußleitern versehen sind, wobei die Leiterplatten durch zumindest eine elektrisch isolierende vliesstoffverstärkte Zwischenschicht voneinander getrennt sind. Durch eine derartige Ausgestaltung ist es beispielsweise möglich, in einer Flachdichtung einen integrierten Drucksensor und einen Leckagesensor vorzusehen.

Die Deckschichten und/oder die Zwischenschicht bestehen bevorzugt aus mit einer polymeren Mischung imprägniertem Aramidfaser-Vliesstoff und weisen ein Flächengewicht von 30 bis 200, bevorzugt 50 bis 100 g/m² auf. Die Aramidfasern besitzen außerordentlich gute mechanische Eigenschaften, wie eine extrem hohe Festigkeit, ein hohes Elastizitätsmodul, eine große Dimensionsstabilität und eine hohe Temperaturbeständigkeit. Außerdem ist bei den Aramidfasern von Vorteil, daß diese elastisch sind. Derartig armierte Flachdichtungen sind daher für den Hochdruckbereich bis ca. 300 bar und den Hochtemperaturbereich bis etwa 400°C sehr gut geeignet. Die Polymere werden in Form von Polymerdispersionen oder Polymerlösungen eingesetzt, wobei das Polymer in Wasser oder in organischen Lösungsmitteln dispergiert bzw. gelöst ist. Die Polymere sollten beim Trocknungsprozeß nur wenig vorpolymersisieren, damit das Polymer im Prepreg beim Laminiervorgang noch fließen kann, um die darüber- und/oder darunterliegenden Leiterplatten zu binden und die Hohlräume in Form von Kanälen zwischen den Leiterbahnen vollständig auszufüllen. Als besonders geeignet haben sich Acrylatmischungen bzw. Copolymerisate von Acrylsäureester mit Polyurethanen und Epoxid als Härter erwiesen. Silikon und Silikonkautschuk können ebenfalls zur Anwendung gelangen.

Der beschriebene Aufbau der Flachdichtung mittels einer Vliesstoff-Prepreglage auf der Unter- und Oberseite der Leiterplatte hat bei Verwendung von Vliesstoff mit einem Flächengewicht von 50 g/m² eine Gesamtdicke von etwa 0,2 mm. Die Gesamtdicke der Flachdichtung läßt sich an die jeweiligen Gegebenheiten des Anwendungsfalles problemlos anpassen, indem entweder ein Vliesstoff mit höherem Flächengewicht eingesetzt wird oder mehrere Prepreglagen übereinander laminiert werden.

Die Leiterplatten können auf einander gegenüberliegenden Seiten einer Verstärkungslage angeordnet sein. Die Verstärkungslage kann durch einen Metallkern oder einen Kern aus polymerem Werkstoff gebildet sein.

Besteht die Verstärkungslage aus einem metallischen Werkstoff, gelangt bevorzugt ein Verstärkungsblech aus Aluminium oder Stahl zur Anwendung.

In einer bevorzugten Variante ist die Verstärkungslage selbst eine starre, Leiterbahnen tragende Leiterplatte. Als Dichtungs- und Isolationsschichten wird dann beidseits mindestens je ein Vliesstoff-Prepreg der vorgenannten Art laminiert.

Auf der Verstärkungslage ist in jedem Falle einerseits die zwischen der ersten Deckschicht und der Zwischenschicht eingeschlossene Leiterplatte und andererseits die zweite Deckschicht angeordnet, wobei die Deckschichten und die Zwischenschicht jeweils aus einem Vliesstoff-Prepreg bestehen. Die Bestandteile werden unter Druck und Hitze miteinander verpreßt, so daß eine Flachdichtung mit Versteifungslage entsteht, auf der sich zumindest auf einer Seite eine in den Dichtungswerkstoff integrierte Leiterplatte mit Anschlußleiter befindet.

Die Verstärkungslage kann mit zumindest einer Durchbrechung versehen sein, wobei die Durchbrechung einen Sensorchip mit allseitigem Abstand umschließt und wobei die Leiterplatte mit Anschlußleitern versehen ist, die signalleitend mit dem Sensorchip in Eingriff sind und wobei die Durchbrechung vollständig mit den Sensorchip umschließender Vergußmasse ausgefüllt ist. Bei einer derartigen Ausführung ist von Vorteil, daß Halbleiterchips mit Sensorelementen und Auswerte-Elektronik in die Dichtung integriert sind. Nach einer vorteilhaften Ausgestaltung wird die Dicke der Verstärkungslage etwas größer gewählt als die Dicke des Sensorchips. Die in die Flachdichtung integrierten Anschlußleiter bilden elektrische Anschlußflächen für den Chip. Die Vergußmasse ist als mechanischer Schutz für den Chip vorgesehen.

Zum Erkennen von Leckagen aus dem abzudichtenden Raum können die an die Deckschichten angrenzenden, abzudichtenden metallischen Flanschflächen und die Metallelektrode zwischen den Deckschichten die Platten eines Doppel-Plattenkondensators bilden. Der durch den Einbau der Flachdichtung gebildete Doppel-Plattenkondensator kann als Leckage-Sensor genutzt werden. Dringt das abzudichtende Medium zwischen die Dichtungsflächen, ändern sich das Dielektrikum und die relative Dielektrizitätskonstante. Die dadurch bewirkte Änderung der Kapazität ist dann ein Maß für den Zustand der Dichtung bezüglich Dichtheit.

Um Streukapazitäten möglichst klein zu halten, ist von Vorteil, daß die Metallelektrode umfangsseitig von einer ringförmigen Schutzelektrode umschlossen ist. Da sich die Permeabilität eines Dielektrikums temperaturabhängig ändert, ist es vorteilhaft, gleichzeitig mit der Kondensatorfläche ein Widerstandselement, beispielsweise in Form eines Leitermäanders, anzubringen. Aus dem Zusammenhang zwischen Widerstandsänderung von elektrischen Leitern und der Temperaturänderung läßt sich ein Signal zur Temperaturkompensation bei der Messung der Kapazität des Doppelkondensators gewinnen. Vorteilhaft wird das Widerstandselement durch die Schutzelektrode gebildet.

In einer bevorzugten Ausgestaltung der Erfindung sind die Anschlußleiter so angeordnet, daß sie die Metallelektroden einer piezoelektrischen Sensor-Folie bei Druckbeaufschlagung der Dichtung elektrisch kontaktierend beeinflussen. Zur einfach Kontaktierung ist es erforderlich, daß beide Anschlüsse der Metallelektroden auf einer Ebene liegen. Zu diesem Zweck werden die Metallelektroden mit Hilfe einer metallischen Durchkontaktierung im Bereich ihrer Anschlußflächen miteinander verbunden. Im Gegensatz zu der Ausgestaltung aus dem Stand der Technik ist das Einbringen spezieller Schutzfolien und einzelner Leiterfolien aufgrund der vliesstoffverstärkten Deckschichten und der Ausformung als Leiterplatte nicht erforderlich.

Die zuvor beschriebene Flachdichtung hat integrierte externe und interne Anschlußleiter und kann beispielsweise als Druck- und/oder Leckagesensor ausgebildet werden.

Die erfindungsgemäße Flachdichtung wird nachfolgend anhand der Fig. 1 bis 10 weiter erläutert.

In Fig. 1 ist ein erstes Ausführungsbeispiel der erfindungsgemäßen Flachdichtung in quergeschnittener Darstellung gezeigt.

In Fig. 2 ist ein Längsschnitt durch die Flachdichtung aus Fig. 1 dargestellt.

In Fig. 3 ist der Aufbau der Flachdichtung, abhängig von den Verfahrensschritten zur Herstellung gezeigt.

In den Fig. 4a und 4b ist jeweils eine Flachdichtung mit einer Verstärkungslage gezeigt, wobei beidseitig der Verstärkungslage Deckschichten mit integrierten Anschlußleitern vorgesehen sind.

Fig. 5 zeigt einen Längsschnitt durch die Dichtung aus Fig. 4 in der Ebene der Verstärkungslage, wobei zusätzlich innerhalb der Dichtung ein Chip angeordnet ist.

In Fig. 6 ist ein Teilschnitt durch das Bauteil aus Fig. 5 gezeigt, wobei eine mögliche Anordnung des Chips dargestellt ist.

In Fig. 7 ist ein Schnitt durch eine Flachdichtung gezeigt, entsprechend Fig. 1, in der auf der Ebene der Anschlußleiter eine piezoelektrische Folie als Drucksensorfolie integriert ist.

In Fig. 8 ist ein Teilschnitt aus Fig. 7 gezeigt, der die Kontaktierung zwischen Sensorfolie und Anschlußleiter verdeutlicht.

In Fig. 9 ist eine Flachdichtung mit einer Kondensatorelektrode gezeigt, die zusammen mit den Flanschen der abzudichtenden Bauteile einen Doppelkondensator bildet.

In Fig. 10 ist eine weitere Ausgestaltung einer Flachdichtung nach Fig. 9 gezeigt, wobei die Kondensatorelektrode von einer Schutzelektrode umschlossen ist.

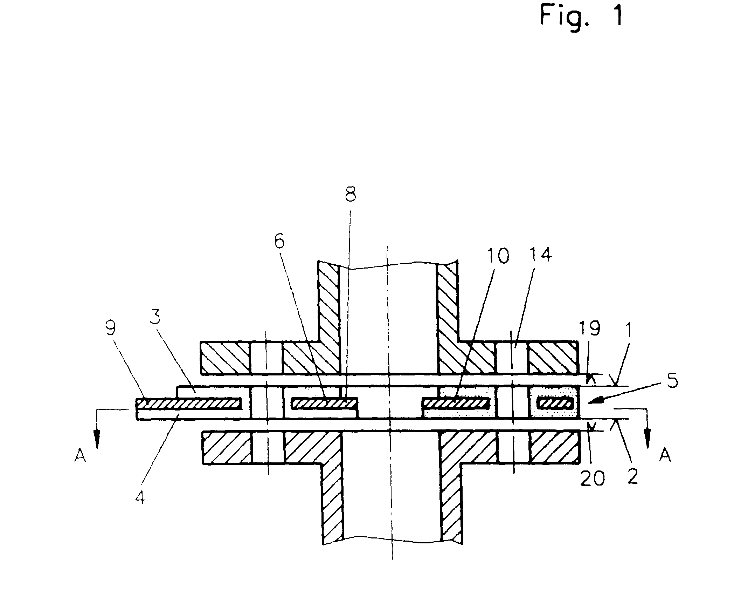

In den Fig. 1 bis 10 sind Dichtungsanordnungen gezeigt, wobei die abzudichtenden Flanschflächen 19, 20 durch eine Flachdichtung abgedichtet sind. Die Dichtflächen 1, 2 der Flachdichtung bestehen aus einem polymerem Werkstoff und sind durch jeweils zumindest eine vliesstoffverstärkte Deckschicht 3, 4 gebildet, wobei die Deckschichten 3, 4 elektrische Leiterbahnen 10 in dem Dichtbereich vollständig umschließen und wobei die Deckschichten 3, 4 und die Leiterbahnen 10 eine flexible elektrische Leiterplatte 5 bilden. Die Leiterplatte 5 ist mit Anschlußleitern 6 versehen, die mit internen und externen Anschlußflächen 8, 9 aus dem Werkstoff der elektrisch isolierenden Deckschichten 3, 4 herausgeführt sind.

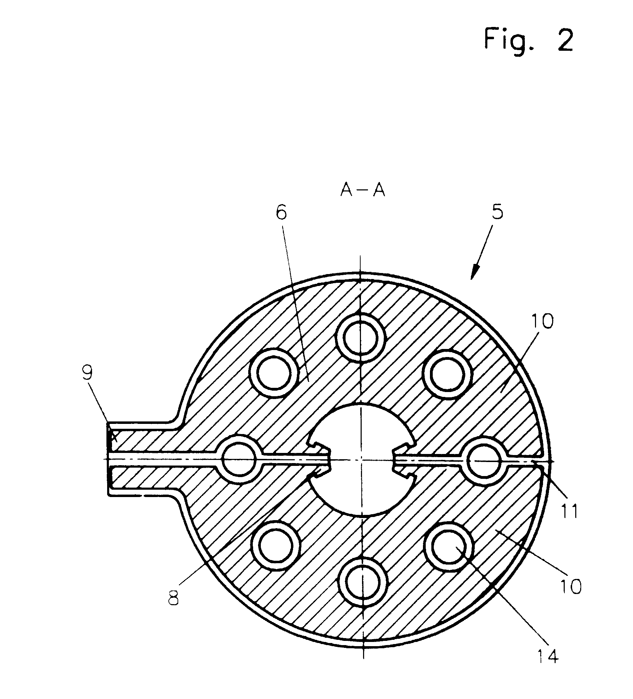

In den Fig. 1 und 2 ist eine Dichtungsanordnung in einer Explosionszeichnung quergeschnitten gezeigt. Die abzudichtenden Flanschflächen 19, 20 bestehen in diesem Beispiel aus metallischem Werkstoff und weisen jeweils Befestigungsdurchbrechungen 14 auf, um miteinander verschraubt werden zu können. Zwischen den abzudichtenden Flanschflächen 19, 20 ist eine als flexible elektrische Leiterplatte 5 ausgebildete Flachdichtung angeordnet, die eine erste und zweite Dichtfläche 1, 2 aufweist, die durch vliesstoffverstärkte Deckschichten 3, 4 gebildet sind. Zwischen den Deckschichten 3, 4 sind elektrische Leiterbahnen 10 angeordnet, die mit Anschlußleitern 6 mit internen und externen Anschlußflächen 8, 9 versehen sind. Die Leiterbahnen 10 können beispielsweise durch eine Kupferfolie gebildet und durch geätzte Kanäle 11 voneinander isoliert sein. Die Leiterbahnen 10 und die Deckschichten 3, 4 sind beispielsweise unter Hitze und Druck miteinander laminiert und dadurch flüssigkeitsdicht aneinander festgelegt. Dadurch, daß die Deckscliichten 3, 4 vor ihrer Laminierung mit den Leiterbahnen 10 als nicht-ausgehärteter Vliesstoff-Prepreg ausgebildet sind, dringt das Polymer des Prepregs während der Laminierung in die Kanäle 11 zwischen den Leiterbahnen 10 ein und füllt diese vollständig aus. Der Werkstoff der Deckschichten 3, 4 weist einen elektrischen Isolationswiderstand von zumindest 10⁸ Ohm auf.

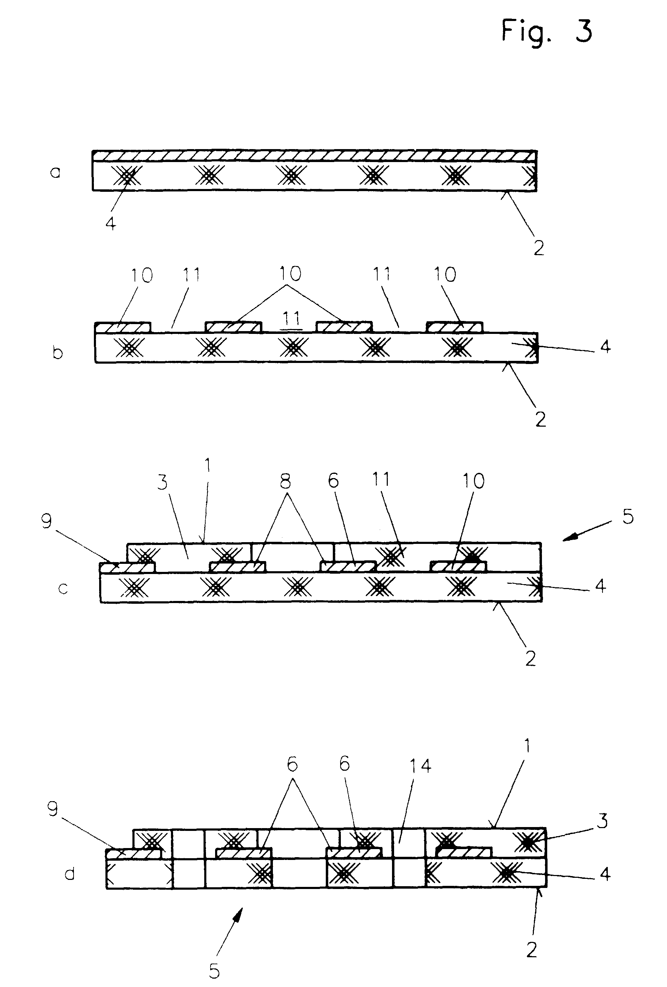

In Fig. 3 ist der Aufbau einer Flachdichtung während der Herstellung gezeigt. In Fig. 3a ist die vliesstoffverstärkte zweite Deckschicht 4 gezeigt, die mit einer Kupferfolie laminiert ist. Anschließend werden die Leiterbahnen 10 in die Kupferfolie geätzt. Die Leiterbahnen 10 sind durch Kanäle 11 voneinander getrennt, wie in Fig. 3b zu erkennen ist. Im Anschluß an die Herstellung der Leiternbahnen 10 wird die erste Deckschicht 3 mit dem Verbund, bestehend aus der geätzten Kupferfolie und der zweiten Deckschicht 4, laminiert, wie in Fig. 3c gezeigt. Dadurch, daß auch die erste Deckschicht 3 als Prepreg ausgebildet ist, dringt das Polymer während der Laminierung in die Kanäle 11 zwischen den Leiterbahnen 10 ein, isoliert diese gegeneinander und dichtet ab. Der hier zu erkennende Anschlußleiter 6 ist mit einer externen Anschlußfläche 9 aus der Flachdichtung herausgeführt. In die laminierte Flachdichtung mit integrierten Anschlußleitern 6 werden, wie in Fig. 3, dargestellt, anschließend die Befestigungsdurchbrechungen 14 eingebracht, die die gesamte Flachdichtung durchdringen.

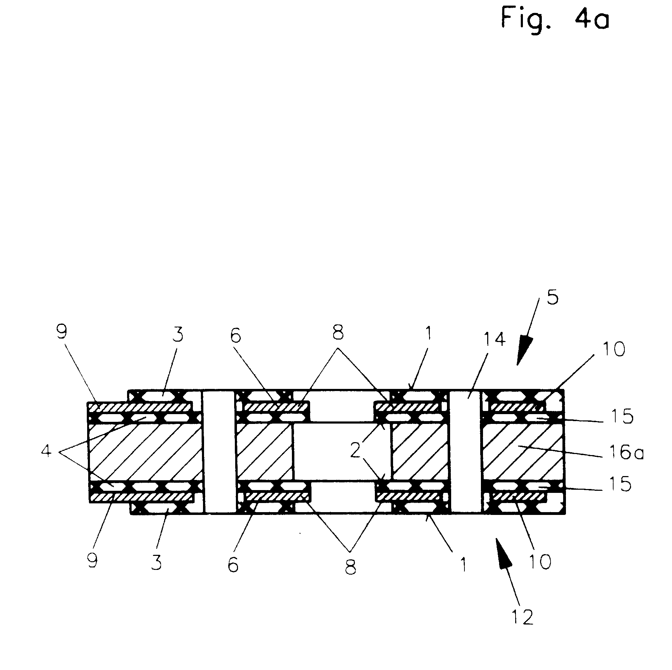

In Fig. 4a ist eine Flachdichtung mit zwei Leiterplatten 5, 12 gezeigt, die durch eine Verstärkungslage 16a aus metallischem Werkstoff verbunden sind. Die Leiterplatten 5, 12 weisen jeweils eine erste und eine zweite Deckschicht 3, 4. auf. Zwischen den Deckschichten 3, 4 sind Leiterbahnen 10 angeordnet, wobei die Leiterbahnen 10 von den Deckschichten 3, 4 dichtend umschlossen sind. Die der Verstärkungseinlage 16a zugewandten Deckschichten 3, 4 einer jeden Leiterplatte 5, 12 bilden die Zwischenschicht 15. Die Zwischenschichten 15 sind flüssigkeitsdicht mit der Verstärkungslage 16a verbunden. Die erste und die zweite Leiterplatte 5, 12 sind jeweils mit Anschlußleitern 6 versehen, wobei interne und externe Anschlußflächen 8, 9 der Anschlußleiter 6 aus der Flachdichtung herausgeführt sind.

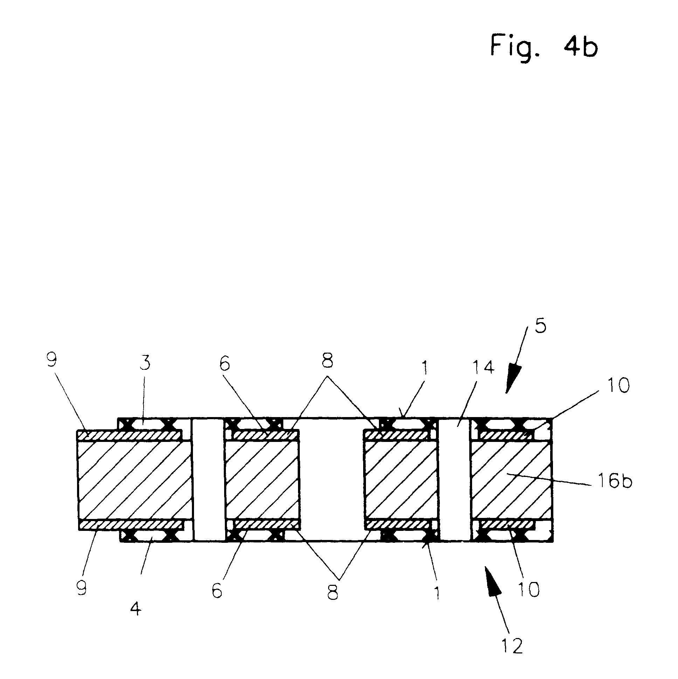

In Fig. 4b wird die Verstärkungseinlage 16b als starre Leiterplatte ausgebildet mit zum Beispiel Epoxidhartglasgewebe als Träger für die Anschlußleiter 6 und die Anschlußflächen 8, 9. Die Leiter werden dann beidseitig wie bei der Leiterplatte 5 mit Vliesstoff-Prepregs abgedeckt, wobei diese im ausgehärteten Zustand als Deckschichten 3, 4 zu den Flanschen als Dichtungs- und Isolationsschichten wirken.

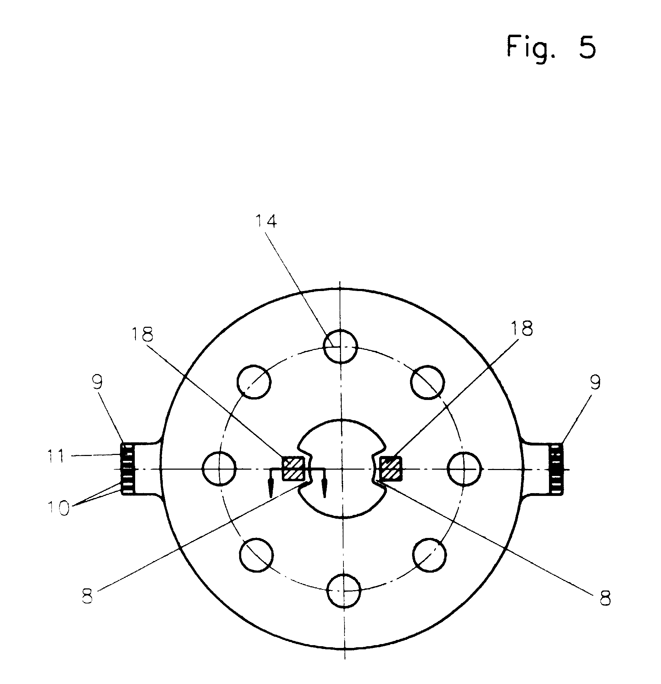

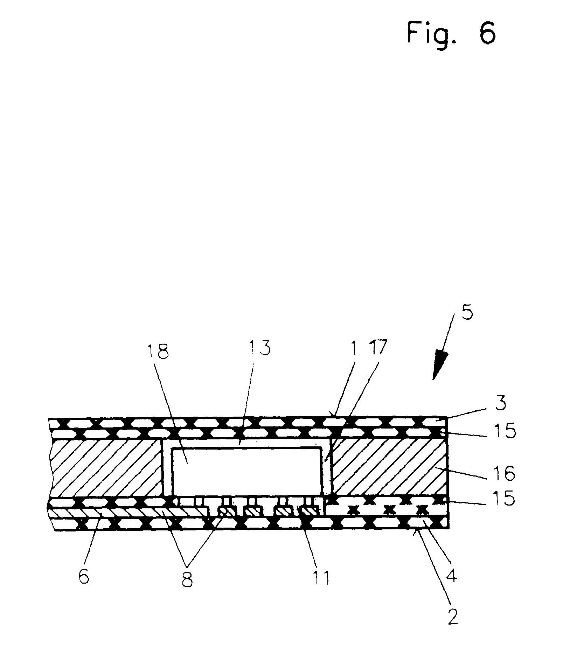

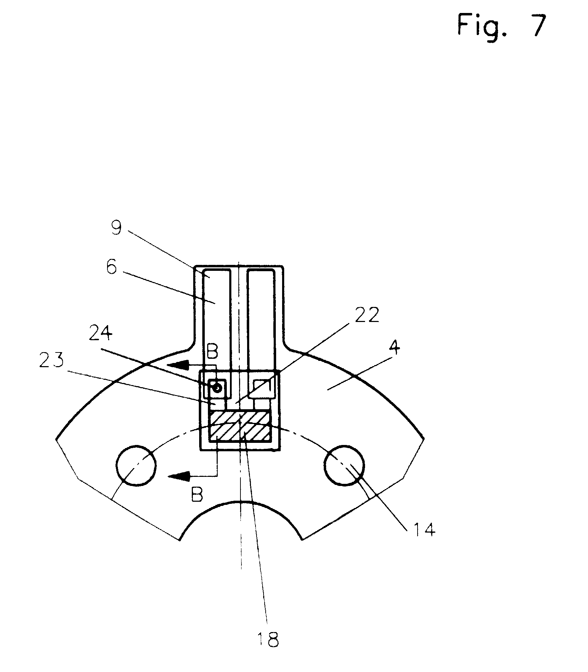

In Fig. 5 ist eine Dichtungsanordnung ähnlich der Dichtungsanordnung aus Fig. 4 in längsgeschnittener Darstellung gezeigt, wobei die externen Anschlußflächen 9 in voneinander abweichenden Axialebenen der Flachdichtung angeordnet sind. Auf der ersten und zweiten Leiterplatte 5, 12 ist jeweils zumindest ein Sensor 18 angeordnet.

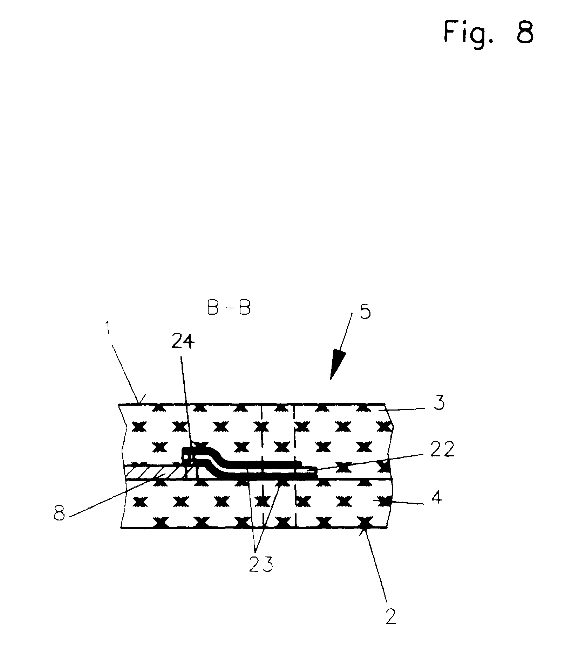

In Fig. 6 ist ein Ausschnitt aus einer Flachdichtung gezeigt, ähnlich der Flachdichtung aus Fig. 4. Die Verstärkungslage 16 ist mit einer Durchbrechung 17 versehen, in der ein Sensorchip 18 angeordnet ist. Die Spalte 7 zwischen Sensorchip 18 und Durchbrechung 17 sowie den Deckschichten 3, 4 im Sensorbereich sind mit einer Vergußmasse 13 gefüllt. Die Leiterbahnen 10 sind mit internen Anschlußflächen 8 versehen. Die Anschlußleiter 6 sind durch Kanäle 11 voneinander getrennt. Die internen Anschlußflächen 8 sind mit dem Sensorchip 18 verbunden.

In Fig. 7 ist ein Ausschnitt aus einer Flachdichtung mit einem Drucksensor gezeigt, wobei der Drucksensor 18 durch eine piezoelektrische Sensorfolie 22 gebildet ist, die als Polymer-Keramikfolie ausgebildet ist. Die Anschlüsse der beiden Elektroden sind zur einfachen elektrisch leitenden Verbindung mit einer Durchkontaktierung 24 versehen.

In Fig. 8 ist ein Schnitt durch die Flachdichtung aus Fig. 7 dargestellt. Die auf einer Polymer-Keramikfolie 22 aufgedampften Metallelektroden 23 sind mit der internen Anschlußfläche 8 des Anschlußleiters 6 verbunden und vollständig von der ersten und zweiten Deckschicht 3, 4 umschlossen. Im Betriebsfall wird durch den Anpreßdruck der Dichtverbindung eine sichere Kontaktierung zwischen den Anschlußleitern 6 und den Metallelektroden 23 der Sensorfolie 22 gewährleistet.

Zur einfachen Kontaktierung ist es erforderlich, daß beide Anschlüsse der Elektroden auf einer Ebene liegen, in diesem Beispiel auf der Unterseite. Zu diesem Zweck werden die Metallelektroden 23 mittels einer Durchkontaktierung 24 mit der unten liegenden Anschlußfläche 8 verbunden.

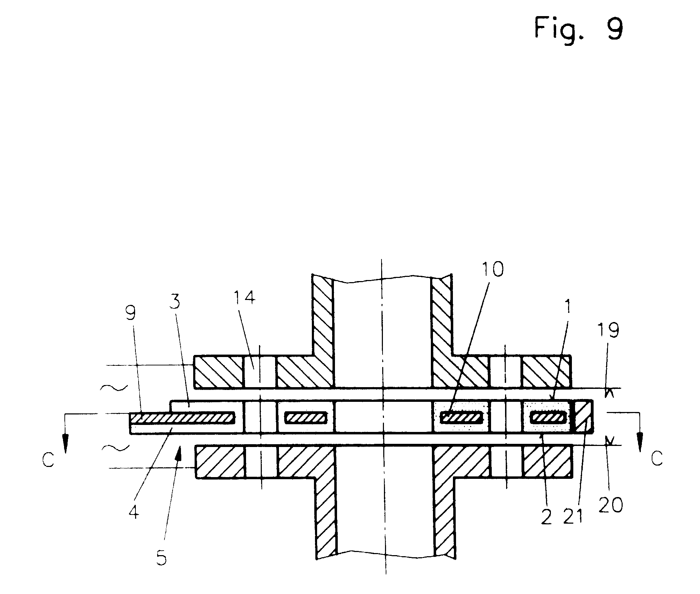

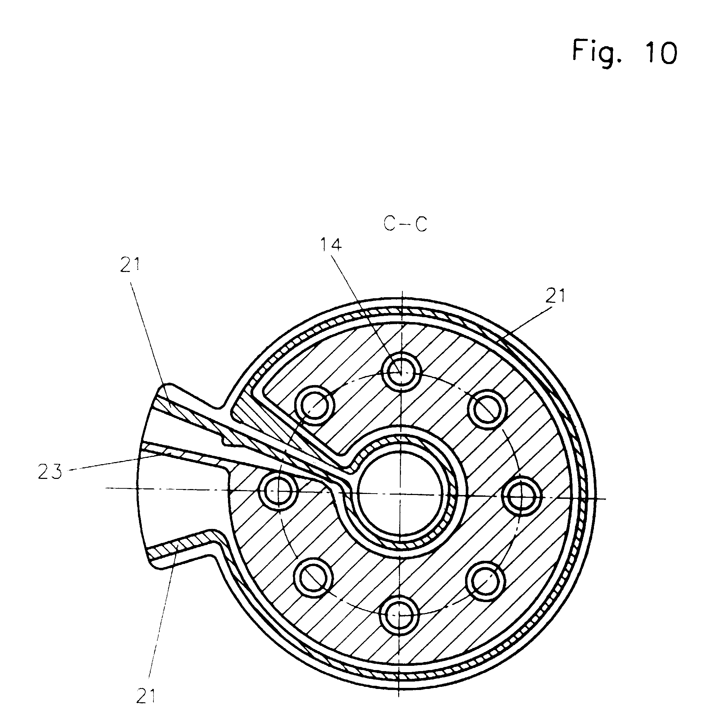

In den Fig. 9 und 10 ist eine Dichtungsanordnung gezeigt, die einen Plattenkondensator bildet, der als Leckagesensor funktioniert. Dringt beispielsweise das abzudichtende Medium zwischen der ersten und der zweiten Deckschicht 3, 4 und den abzudichtenden metallischen Flanschflächen 19, 20 oder in die Deckschichten 3, 4 ein, dann ändert sich die Dielektrizitätskonstante und damit die Kapazität des Doppel-Plattenkondensators. Die Änderung der Kapazität ist ein Maß für die Leckage. Zur Einschränkung des elektrischen Streufeldes ist eine Schutzelektrode 21 vorgesehen, die als Ringelektrode ausgebildet ist, wobei die Ringelektrode um die als Kondensatorelektrode ausgebildete Metallelektrode 23 der Dichtung angeordnet ist.

## Patentansprüche

1. Flachdichtung mit Dichtflächen aus polymerem Werkstoff, dadurch gekennzeichnet, daß ihre erste (1) und zweite (2) Dichtfläche jeweils zumindest durch eine vliesstoffverstärkte Deckschicht gebildet ist, daß dabei mindestens die zwei Deckschichten (3, 4) gemeinsam eine flexible Leiterplatte (5) darstellen, daß deren Material elektrische Leiterbahnen (10) in den Dichtbereichen vollständig umschließt, daß die Leiterbahnen (10) mit Anschlußleitern (6) versehen sind, die mit Anschlußflächen (8, 9) aus der Leiterplatte (5) herausgeführt sind, und daß der Werkstoff der Deckschichten (3, 4) einen elektrischen Widerstand von mindestens 10⁸ Ohm aufweist und als Isolierung für die Leiterbahnen (10) ausgebildet ist.

2. Flachdichtung nach Anspruch 1, dadurch gekennzeichnet, daß die Leiterbahnen (10) durch geätzte Kanäle (11) begrenzt sind und daß die Kanäle (11) vom Werkstoff der angrenzenden ersten und zweiten Deckschicht (3, 4) ausgefüllt sind.

3. Flachdichtung nach Anspruch 1 bis 2, dadurch gekennzeichnet, daß die Leiterbahnen (10) und die Deckschichten (3, 4) kraft- und/oder formschlüssig verbunden sind.

4. Flachdichtung nach Anspruch 1 bis 3, dadurch gekennzeichnet, daß zumindest zwei Leiterplatten (5, 12) zur Anwendung gelangen, deren jeweilige Leiterbahnen (10) mit Anschlußleitern (6) versehen sind, und daß die Leiterplatten (5, 12) durch zumindest eine elektrisch isolierende, vliesstoffverstärkte Zwischenschicht (15) voneinander getrennt sind.

5. Flachdichtung nach Anspruch 1 bis 4, dadurch gekennzeichnet, daß die Deckschichten (3, 4) und/oder die Zwischenschicht (15) aus mit einer Polymermischung imprägniertem Aramidfaser-Vliesstoff bestehen und ein Flächengewicht von 30 bis 200 g/m² aufweisen.

6. Flachdichtung nach Anspruch 1 bis 5, dadurch gekennzeichnet, daß die Leiterplatten (5, 12) auf einander gegenüberliegenden Seiten einer Verstärkungslage (16) angeordnet sind.

7. Flachdichtung nach Anspruch 6, dadurch gekennzeichnet, daß die Verstärkungslage (16) durch einen Metallkern gebildet ist.

8. Flachdichtung nach Anspruch 6, dadurch gekennzeichnet, daß die Verstärkungslage (16) durch einen Kern aus polymerem Werkstoff gebildet ist.

9. Flachdichtung nach Anspruch 8, dadurch gekennzeichnet, daß die Verstärkungslage (16) eine starre, Leiterbahnen (10) tragende Leiterplatte (5) ist, welche beiderseits mit Deckschichten (3, 4) aus imprägniertem Vliesstoff laminiert ist.

10. Flachdichtung nach Anspruch 6 bis 9, dadurch gekennzeichnet, daß die Verstärkungslage (16) mit zumindest einer Durchbrechung (17) versehen ist, daß die Durchbrechung (17) einen Sensorchip (18) mit allseitigem Abstand umschließt, daß die Leiterplatte (5) mit Anschlußleitern (6) versehen ist, die signalleitend mit dem Sensorchip (18) in Eingriff sind und daß die Durchbrechung (17) vollständig mit den Sensorchip (18) umschließender Vergußmasse (13) ausgefüllt ist.

11. Flachdichtung nach Anspruch 1 bis 10, dadurch gekennzeichnet, daß an die Deckschichten (3, 4) angrenzende, abzudichtende, metallische Flanschflächen (19, 20) und eine Metallelektrode (23) zwischen den Deckschichten (3, 4) die Platten eines Doppel-Plattenkondensators bilden.

12. Flachdichtung nach Anspruch 11, dadurch gekennzeichnet, daß die Metallelektrode (23) umfangsseitig von einer ringförmigen Schutzelektrode (21) umschlossen ist.

13. Flachdichtung nach einem der vorhergehenden Ansprüche, dadurch gekennzeichnet, daß die Anschlußleiter (6) die Metallelektroden (23) einer piezoelektrischen Sensor-Folie (22) bei Druckbeaufschlagung elektrisch kontaktierend beeinflussen.

## Claims

1. A flat gasket with sealing surfaces made of polymeric material, characterized in that its first (1) and second (2) sealing surfaces are respectively formed at least by a nonwoven-reinforced outer layer, in that at least the two outer layers (3, 4) together make up a flexible printed circuit board (5), in that their material completely encloses electrical conductor tracks (10) in the sealing regions, in that the conductor tracks (10) are provided with terminal conductors (6), which are led out of the printed circuit board (5) by terminal areas (8, 9), and in that the material of the outer layers (3, 4) has an electrical resistance of at least 10⁸ ohms and is designed as insulation for the conductor tracks (10).

2. A flat gasket according to claim 1, characterized in that the conductor tracks (10) are bounded by etched channels (11) and in that the channels (11) are filled by the material of the adjacent first and second outer layers (3, 4).

3. A flat gasket according to either of claims 1 and 2, characterized in that the conductor tracks (10) and the outer layers (3, 4) are connected non-positively and/or positively.

4. A flat gasket according to any of claims 1 to 3, characterized in that at least two printed circuit boards (5, 12) are used, the respective conductor tracks (10) of which are provided with terminal conductors (6), and in that the printed circuit boards (5, 12) are separated from each other by at least one electrically insulating, nonwoven-reinforced intermediate layer (15).

5. A flat gasket according to any of claims 1 to 4, characterized in that the outer layers (3, 4) and/or the intermediate layer (15) comprise an aramid-fibre nonwoven impregnated with a polymer blend and have a mass per unit area of from 30 to 200 g/m².

6. A flat gasket according to any of claims 1 to 5, characterized in that the printed circuit boards (5, 12) are arranged on mutually opposite sides of a reinforcing layer (16).

7. A flat gasket according to claim 6, characterized in that the reinforcing layer (16) is formed by a metal core.

8. A flat gasket according to claim 6, characterized in that the reinforcing layer (16) is formed by a core made of polymeric material.

9. A flat gasket according to claim 8, characterized in that the reinforcing layer (16) is a rigid printed circuit board (5) which bears conductor tracks (10) and is laminated on both sides with outer layers (3, 4) made of an impregnated nonwoven.

10. A flat gasket according to any of claims 6 to 9, characterized in that the reinforcing layer (16) is provided with at least one opening (17), in that the opening (17) encloses a sensor chip (18) while maintaining a spacing on all sides, in that the printed circuit board (5) is provided with terminal conductors (6), which are in signal-conducting engagement with the sensor chip (18), and in that the opening (17) is completely filled with encapsulating material (13) enclosing the sensor chip (18).

11. A flat gasket according to any of claims 1 to 10, characterized in that metallic flange areas (19, 20), which are adjacent to the outer layers (3, 4) and are to be sealed off, and a metal electrode (23), form the plates of a double-plate capacitor between the outer layers (3, 4).

12. A flat gasket according to claim 11, characterized in that the metal electrode (23) is peripherally enclosed by an annular protective electrode (21).

13. A flat gasket according to one of the preceding claims, characterized in that the terminal conductors (6) influence the metal electrodes (23) of a piezoelectric sensor foil (22) in an electrically contacting manner when subjected to pressure.

## Revendications

1. Joint plat pourvu de surfaces d'étanchéité en matière polymère, caractérisé en ce que sa première (1) et sa seconde (2) surfaces d'étanchéité sont formées, à chaque fois, au moins par une couche de recouvrement renforcée par une matière non-tissée, en ce que, avec cette exécution, les deux couches de recouvrement (3, 4) au moins représentent, ensemble, une plaquette flexible (5), en ce que leur matière entoure complètement des pistes conductives électriques (10) dans les zones d'étanchéité, en ce que les pistes conductives (10) sont pourvues de conducteurs de connexion (6) qui sortent de la plaquette (5) avec des surfaces de connexion (8, 9) et en ce que le matériau des couches de recouvrement (3, 4) présente une résistance électrique d'au moins 10⁸ ohms et est exécuté en tant qu'isolation pour les pistes conductives (10).

2. Joint plat selon la revendication 1, caractérisé en ce que les pistes conductives (10) sont limitées par des canaux gravés (11) et en ce que les canaux (11) sont remplis par le matériau des première et seconde couches de recouvrement (3, 4) adjacentes.

3. Joint plat selon l'une des revendications 1 à 2, caractérisé en ce que les pistes conductives (10) et les couches de recouvrement (3, 4) sont reliées par adhérence et/ou par conjugaison de forme.

4. Joint plat selon l'une des revendications 1 à 3, caractérisé en ce que l'on utilise au moins deux plaquettes (5, 12) dont les pistes conductives (10) respectives sont pourvues de conducteurs de connexion (6) et en ce que les plaquettes (5, 12) sont séparées l'une de l'autre par au moins une couche intermédiaire (15) électriquement isolante renforcée par une matière non-tissée.

5. Joint plat selon l'une des revendications 1 à 4, caractérisé en ce que les couches de recouvrement (3, 4) et/ou la couche intermédiaire (15) sont formées par une matière non-tissée en fibres d'aramide imprégnée d'un mélange de polymères et ont un grammage allant de 30 à 200 g/m².

6. Joint plat selon l'une des revendications 1 à 5, caractérisé en ce que les plaquettes (5, 12) sont situées sur les côtés opposés d'une couche de renforcement (16).

7. Joint plat selon la revendication 6, caractérisé en ce que la couche de renforcement (16) est formée par un noyau métallique.

8. Joint plat selon la revendication 6, caractérisé en ce que la couche de renforcement (16) est formée par un noyau en matière polymère.

9. Joint plat selon la revendication 8, caractérisé en ce que la couche de renforcement (16) est une plaquette (5) rigide qui porte des pistes conductives (10) et est stratifiée, sur les deux côtés, avec des couches de recouvrement (3, 4) faites d'une matière non-tissée imprégnée.

10. Joint plat selon l'une des revendications 6 à 9, caractérisé en ce que la couche de renforcement (16) est pourvue d'au moins une découpure (17), en ce que la découpure (17) entoure un capteur en puce (18) avec une distance sur tous les côtés, en ce que la plaquette (5) est pourvue de conducteurs de connexion (6) qui sont mis en contact avec le capteur en puce (18) par une liaison de signalisation et en ce que la découpure (17) est entièrement remplie d'une masse de remplissage (13) qui entoure le capteur en puce (18).

11. Joint plat selon l'une des revendications 1 à 10, caractérisé en ce que des surfaces de bride (19, 20) métalliques à étanchéifier adjacentes aux couches de recouvrement (3, 4) et une électrode métallique (23) située entre les couches de recouvrement (3, 4) forment les lames d'un condensateur à deux lames.

12. Joint plat selon la revendication 11, caractérisé en ce que l'électrode métallique (23) est entourée, sur le côté de sa circonférence, par une électrode de protection (21) annulaire.

13. Joint plat selon l'une des revendications précédentes, caractérisé en ce que les conducteurs de connexion (6) influencent les électrodes métalliques (23) d'une feuille de capteur piézo-électrique (22) par un contact électrique établi lors de l'application d'une pression.
